# EUROPEAN PATENT APPLICATION

(11) **EP 3 498 982 A1**
(43) Date of publication of application: **19.06.2019**
(21) Application number: 18206350.3
(22) Date of filing: 14.11.2018
(51) Int. Cl.: F01D 11/00, F16J 15/34

(54) **FORCE BALANCED FACE SEAL, CORRESPONDING GAS TURBINE ENGINE AND METHOD OF MANUFACTURING A FORCE BALANCED FACE SEAL**

(30) Priority: 13.12.2017 US 201715840632
(71) Applicant: United Technologies Corporation, Farmington, CT 06032 (US)
(72) Inventor: MILLER, Jonathan Logan, Ware, MA Massachusetts 01082 (US); CRAIG, Colin D., West Hartford, CT Connecticut 06117 (US)
(74) Representative: Dehns

(57) **Abstract**

A force balanced face seal (200) may comprise a seal housing (204) comprising an annular extrusion (206), a seal support (208), wherein the annular extrusion (206) is disposed within the seal support (208), and a primary seal (202) coupled to the seal housing (204), wherein the primary seal (202) comprises a sealing face (308) and a base (310) opposite the sealing face (308) and proximate the seal housing (204).

## Description

### FIELD

The disclosure relates generally to face seals and face seal arrangements in gas turbine engines.

### BACKGROUND

Face seal failure is typically observed as premature sealing face wear tending to result in a decreased seal closing force. The decrease in seal closing force tends to result in instability of the seal against the face and may tend to increase the wear rate and may result in additional damage to the seal or may tend to result in damage to the gas turbine engine or gas turbine engine hardware surrounding the seal.

### SUMMARY

In various embodiments the present disclosure provides a force balanced face seal comprising a seal housing comprising an annular extrusion, a seal support, wherein the annular extrusion is disposed within the seal support, and a primary seal coupled to the seal housing, wherein the primary seal comprises a sealing face, a base opposite the sealing face and proximate the seal housing.

In various embodiments, the primary seal further comprises an inner diameter and an outer diameter, wherein the inner diameter comprises an inner diameter feature geometry over a portion of the inner diameter between the sealing face and the base. In various embodiments, the inner diameter feature geometry comprises one of a ramp or a double step. In various embodiments, the inner diameter feature geometry comprises one of a radial geometry, a multi radial geometry, a convex geometry, or a concave geometry. In various embodiments, the seal housing is driven axially, with respect to an axis of the annular extrusion, away from the seal support in response to a seal closing force. In various embodiments, the seal closing force is a function of a spring force and a pressure force. In various embodiments, the pressure force is a function of the inner diameter feature geometry and a wear condition of the primary seal, and wherein the spring force is a function of the wear condition of the seal, and wherein the wear condition of the seal corresponds to a distance. In various embodiments, the spring force changes at a first rate with respect to the wear condition and the pressure force changes at a second rate with respect to the inner diameter feature geometry and the wear condition, wherein the first rate defines a decrease in the spring force between an initial wear condition and a complete wear condition, wherein the inner diameter feature geometry is such that the second rate defines a decrease in the pressure force between the initial wear condition and the complete wear condition greater than the decrease in the spring force between the initial wear condition and the complete wear condition. In various embodiments, in response to the complete wear condition, the inner diameter feature geometry is worn away.

In various embodiments, the present disclosure provides a gas turbine engine comprising a compressor section configured to compress a gas, a combustor section aft of the compressor section and configured to combust the gas, and a force balanced face seal, comprising a seal housing comprising an annular extrusion, a seal support, wherein the annular extrusion is disposed within the seal support, and a primary seal coupled to the seal housing, wherein the primary seal comprises a sealing face and a base opposite the sealing face and proximate the seal housing.

In various embodiments, the primary seal further comprises an inner diameter and an outer diameter, wherein the inner diameter comprises an inner diameter feature geometry over a portion of the inner diameter between the sealing face and the base. In various embodiments, the inner diameter feature geometry comprises one of a ramp or a double step. In various embodiments, the inner diameter feature geometry comprises one of a radial geometry, a multi radial geometry, a convex geometry, or a concave geometry. In various embodiments, the seal housing is driven axially, with respect to an axis of the annular extrusion, away from the seal support in response to a seal closing force. In various embodiments, the primary seal divides a high pressure compartment and a low pressure compartment, wherein the seal closing force is a function of a spring force and a pressure force, wherein the pressure force acts against the spring force in response to a pressure difference between the high pressure compartment and the low pressure compartment. In various embodiments, the pressure force is a function of the inner diameter feature geometry and a wear condition of the primary seal, and wherein the spring force is a function of the wear condition of the seal, and wherein the wear condition of the seal corresponds to a distance. In various embodiments, the spring force changes at a first rate with respect to the wear condition and the pressure force changes at a second rate with respect to the inner diameter feature geometry and the wear condition, wherein the first rate defines a decrease in the spring force between an initial wear condition and a complete wear condition, wherein the inner diameter feature geometry is such that the second rate defines a decrease in the pressure force between the initial wear condition and the complete wear condition greater than the decrease in the spring force between the initial wear condition and the complete wear condition. In various embodiments, in response to the complete wear condition, the inner diameter feature geometry is worn away. In various embodiments, the seal housing further comprises an alignment tab having a forward face and the seal support comprises an alignment pin having a flange, wherein the forward face of the alignment tab contacts the flange in response to the compete wear condition

In various embodiments, the present disclosure provides method of manufacturing a force balanced face seal, the method comprising determining a spring force component and a pressure force component of a seal closing force of a seal housing having a primary seal comprising an inner diameter, wherein the pressure force component acts against the spring force component, calculating an inner diameter geometry of the inner diameter of the primary seal such that a decrease in the pressure force component between an initial wear condition and a complete wear condition is greater than a decrease in spring force component between the initial wear condition and the complete wear condition, forming the inner diameter geometry over a portion of the inner diameter of the primary seal between a sealing face and a base of the primary seal, coupling the primary seal to the seal housing having the annular extrusion and inserting the annular extrusion into a seal support comprising an alignment pin and a spring and coupling the seal support about a shaft of a gas turbine engine and contacting the sealing face with a seal seat of the shaft.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates an exemplary gas turbine engine, in accordance with various embodiments;
FIG. 2A illustrates a force balanced face seal, in accordance with various embodiments;
FIG. 2B illustrates a force balanced face seal, in accordance with various embodiments;
FIG. 3 illustrates a cross section of a force balanced face seal, in accordance with various embodiments;
FIG. 4 illustrates a cross section of a force balanced face seal, in accordance with various embodiments;
FIG. 5 illustrates a cross section of a force balanced face seal in various wear conditions, in accordance with various embodiments;
FIG. 6 illustrates a graphical representation of a change in seal closing force of a force balanced face seal; and
FIG. 7 illustrates a method of manufacturing a force balanced face seal, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosures, it should be understood that other embodiments may be realized and that logical, chemical, and mechanical changes may be made without departing from the scope of the disclosures. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

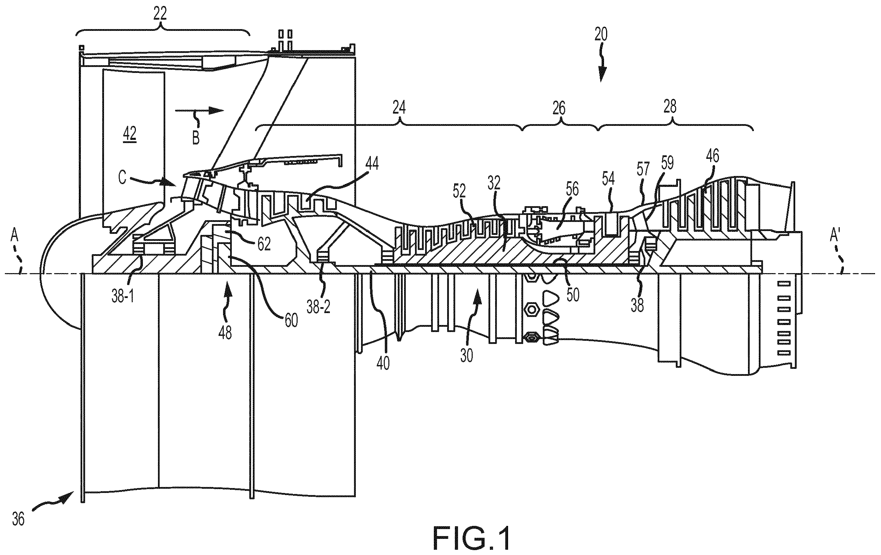

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmenter section among other systems or features. In operation, fan section 22 can drive air along a bypass flow-path B while compressor section 24 can drive air for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including turbojet engines, a low-bypass turbofans, a high bypass turbofans, or any other gas turbine known to those skilled in the art including single spool and three-spool architectures.

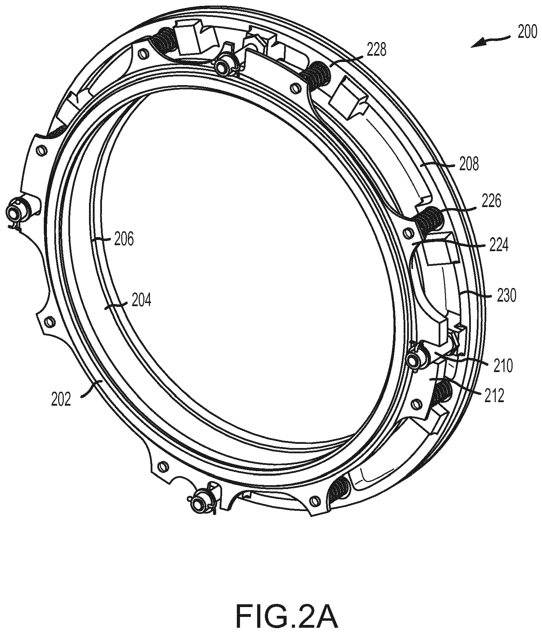

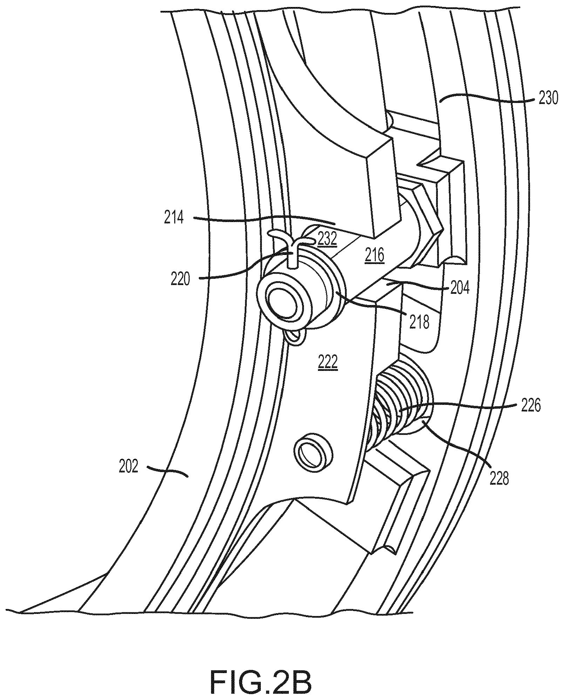

Gas turbine engine 20 may generally comprise a low speed spool 30 and a high speed spool 32 mounted for rotation about an engine central longitudinal axis A-A' relative to an engine static structure 36 via one or more bearing systems 38 (shown as bearing system 38-1 and bearing system 38-2 in FIG. 2). It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure (or first) compressor section 44 (also referred to a low pressure compressor) and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor ("HPC") 52 (e.g., a second compressor section) and high pressure (or second) turbine section 54. A combustor 56 may be located between HPC 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then HPC 52, mixed and burned with fuel in combustor 56, then expanded over high pressure turbine 54 and low pressure turbine 46. Mid-turbine frame 57 includes airfoils 59 which are in the core airflow path. Low pressure turbine 46, and high pressure turbine 54 rotationally drive the respective low speed spool 30 and high speed spool 32 in response to the expansion.

In various embodiments, HPC 52 may comprise alternating rows of rotating rotors and stationary stators. Stators may have a cantilevered configuration or a shrouded configuration. More specifically, a stator may comprise a stator vane, a casing support and a hub support. In this regard, a stator vane may be supported along an outer diameter by a casing support and along an inner diameter by a hub support. In contrast, a cantilevered stator may comprise a stator vane that is only retained and/or supported at the casing (e.g., along an outer diameter).

In various embodiments, rotors may be configured to compress and spin a fluid flow. Stators may be configured to receive and straighten the fluid flow. In operation, the fluid flow discharged from the trailing edge of stators may be straightened (e.g., the flow may be directed in a substantially parallel path to the centerline of the engine and/or HPC) to increase and/or improve the efficiency of the engine and, more specifically, to achieve maximum and/or near maximum compression and efficiency when the straightened air is compressed and spun by rotor 64.

According to various embodiments and with additional reference to FIGS. 2A and 2B, a gas turbine engine such as gas turbine engine 20 may comprise a force balanced face seal 200. Force balanced face seal 200 comprises a primary seal 202 which may be press fit into seal housing 204. Seal housing 204 has an annular extrusion 206 disposed within seal support 208. In various embodiments, seal support 208 may comprise alignment pins 210 extending axially outward from forward face 230 of seal support 208 and spring pockets 228 cut axially inward of forward face 230. In various embodiments, seal housing 204 may comprise spring tabs 224 coupled to coil springs 226 and alignment tabs 212 having alignment channels 214. In various embodiments, sleeves 216 may be disposed over alignment pins 210 and comprise a flat portion 232 configured to interface with a corresponding flat portion of inner surface 234 of alignment channels 214.

In various embodiments, seal housing 204 is aligned circumferentially with seal support 208 when alignment pins 210 are disposed within alignment channels 241 and flat portion 232 is in contact with inner surface 234. In response, annular extrusion 206 may be slid axially inward toward forward face 230 and coil springs 226 may be disposed within spring pockets 228 tending thereby to compress coil springs 226. In various embodiments, flange 218 is fitted against sleeve 216 over a distal end of alignment pin 210. In various embodiments, flange 218 is coupled to alignment pin 210 by cotter pin 220 and an interference between flange 218 and forward face 222 of alignment tab 212 tends to inhibit seal housing 204 and annular extrusion 206 from backing out seal support 208.

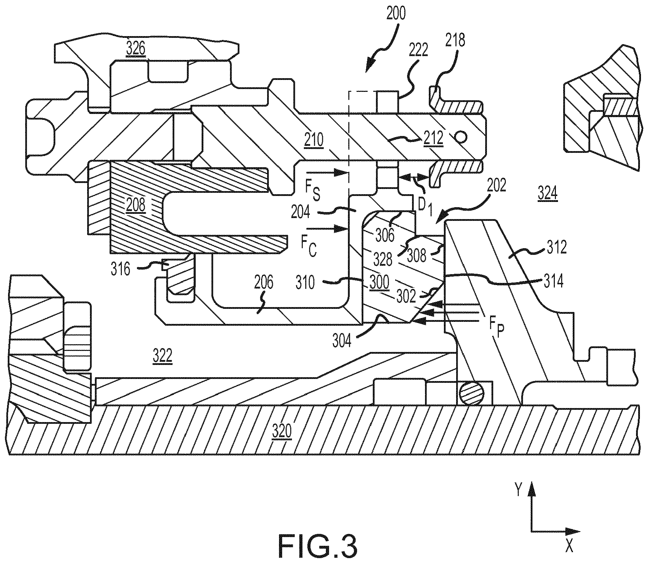

In various embodiments and with additional reference to FIG. 3, force balanced face seal 200 is shown in cross section as installed in a gas turbine engine such as gas turbine engine 20. Force balanced face seal 200 is coupled to case 326 at seal support 208. A shaft 320 comprising a seal seat 312 is disposed within the annulus of annular extrusion 206 of seal housing 204. In various embodiments, primary seal 202 comprises a seal material 300 having an inner diameter 304, an outer diameter 306, a sealing face 308, and a base 310. In various embodiments, a ramp 302 may be cut over a portion of inner diameter 304 inward of inner diameter 304 toward outer diameter 306. In various embodiments a step 328 may be cut inward from outer diameter 306 toward inner diameter 304 and sealing face 308 may be defined between step 328 and ramp 302. In various embodiments, seal housing 204 may comprise a secondary seal 316 at a distal end of annular extrusion 206 opposite primary seal 202. In various embodiments, secondary seal 316 may seal against seal support 208.

In various embodiments, coil springs 226 may impart a spring force Fs upon seal housing 204 driving seal housing axially away from seal support 208 and relatively toward seal seat 312 tending thereby to drive sealing face 308 of primary seal 202 into contact with seating face 314 of seal seat 312. In various embodiments, primary seal 202 may divide a high pressure compartment 322 and a low pressure compartment 324 and, in response to a difference in pressure between the high pressure compartment 322 and the low pressure compartment 324, a pressure force Fp may tend to act at ramp 302 and thereby tend to reduce spring force Fs. In various embodiments, Fp may be a function of an area of ramp 302. In various embodiments, a seal closing force Fc may be a function of the spring force Fs and the pressure force Fp. In other words, Fp and Fs may be components of the seal closing force Fc upon seal housing 204 tending to drive seal housing axially away from seal support 208 and relatively toward seal seat 312 tending thereby to drive sealing face 308 of primary seal 202 into contact with seating face 314 of seal seat 312.

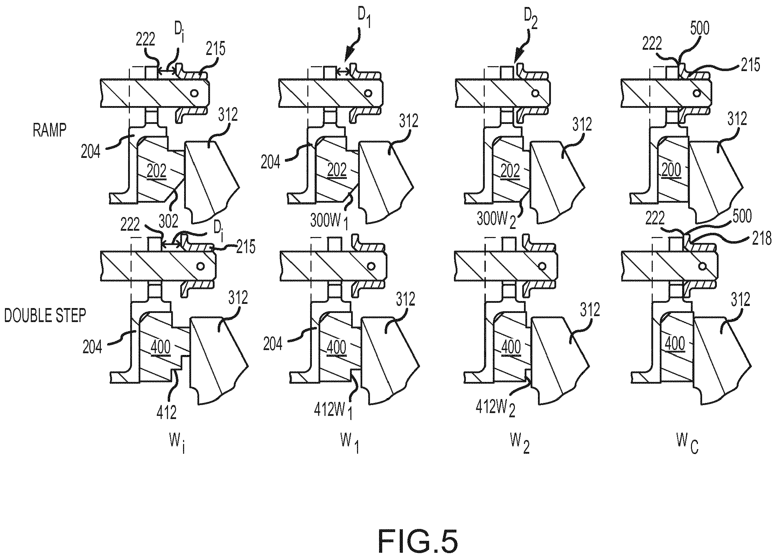

In various embodiments, when primary seal 202 is initially contacted at sealing face 308 with seal seat 312 at seating face 314 forward face 222 of alignment tab 212 may be separated from flange 218 by a distance D corresponding to a wear condition of primary seal 202. In various embodiments, in response to a wear condition of primary seal 202, seal material 300 may be abraded or lost at sealing face 308 tending to allow coil springs 226 to expand and drive seal housing 204 toward seal seat 312. In various embodiments, and with brief reference to FIG. 5, in response to a wear condition of primary seal 202, distance D may correspond to an initial distance (Di)and decrease through intermediate distances (D1, D2...Dn) as primary seal progressively wears from an initial wear condition (Wi) through various wear conditions (W1, W2 ... Wn) toward a complete wear condition (Wc). In various embodiments, in response to a complete wear condition of primary seal 202 alignment tab 212 may contact flange 218 at forward face 222 tending thereby to inhibit contact between sealing face 308 and seating face 314. In various embodiments, the spring force Fs may decrease linearly with respect to a decrease in D. In various embodiments, the area of ramp 302 may tend to decrease linearly with respect to the decrease in D tending thereby to decrease the pressure force Fp and, in response, an area of sealing face 308 may increase. In this regard, the seal closing force Fc may be balanced with respect to the spring force Fs and the pressure force Fp in response to a configuration of ramp 302. In various embodiments, Fp may tend to resist Fs and Fc may be balanced such that the decrease in Fs is less than the decrease in Fp. Stated another way, the seal closing force Fc may be balanced such that Fp decreases at a greater rate with respect to D than does Fs.

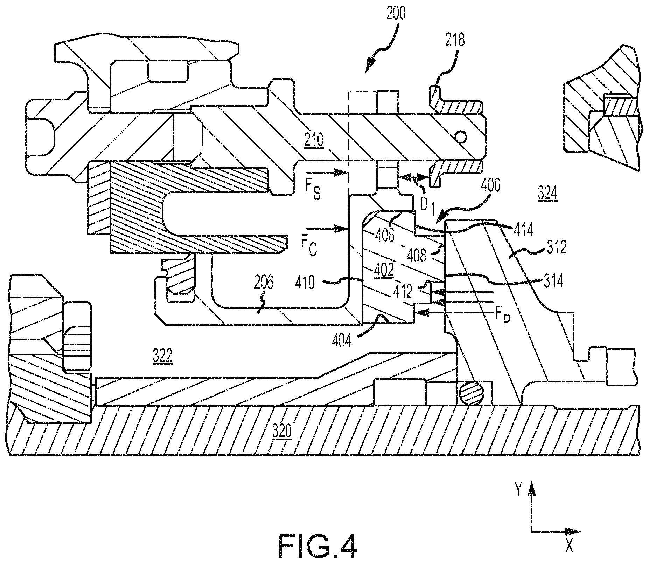

In various embodiments and with additional reference to FIG. 4, force balanced face seal 200 is shown in cross section as installed in a gas turbine engine such as gas turbine engine 20 comprising a primary seal 400. In various embodiments, primary seal 400 comprises a seal material 402 having an inner diameter 404, an outer diameter 406, a sealing face 408, and a base 410. In various embodiments, double step 412 may be cut into seal material 402 inward from inner diameter 404 toward outer diameter 406 and a step 414 may be cut into seal material 402 inward from outer diameter 406 toward inner diameter 404. In various embodiments, sealing face 408 may be defined between step 414 and double step 412. In various embodiments, Fp may be a function of an area of double step 412. In various embodiments, the area of double step 412 may tend to decrease as step function with respect to the decrease in D tending thereby to decrease the pressure force Fp and, in response, an area of sealing face 308 may increase. In this regard, the seal closing force Fc may be balanced with respect to the spring force Fs and the pressure force Fp in response to a configuration of double step 412. In various embodiments, Fp may tend to resist Fs and Fc may be balanced such that the decrease in Fs is less than the decrease in Fp. Stated another way, the seal closing force Fc may be balanced such that, on average, Fp decreases at a greater rate with respect to D than does Fs.

In various embodiments, a primary seal such as, for example, primary seal 202 or primary seal 400, may comprise inner diameter features (such as, for example, double step 412 or ramp 302) at an internal diameter, such as inner diameter 304, between a sealing face, such as sealing face 308, and a base, such as base 318. In various embodiments, inner diameter features may be defined by an inner diameter feature geometry comprising at least one of a radial, or a multi radial, or a concave, or a convex, geometry. In various embodiments, the pressure force Fp may be a function of the inner diameter feature geometry. In various embodiments, the internal diameter feature may change with respect to D and, in this regard, the seal closing force Fc may be balanced with respect to the spring force Fs and the pressure force Fp as the primary seal progressively wears through various wear conditions toward a complete wear condition. In various embodiments, Fp may tend to resist Fs and Fc may be balanced such that the decrease in Fs is less than the decrease in Fp. Stated another way, the seal closing force Fc may be balanced such that, on average, Fp decreases at a greater rate with respect to D than does Fs. In various embodiments, a seal material such as, for example, seal material 300 or seal material 402, may comprise one of a carbon, a ceramic, a composite, a rubber, or a synthetic rubber.

In various embodiments and with additional reference to FIG 5, primary seal 202 and primary seal 400 are illustrated in cross section in various wear conditions. In various embodiments, primary seal 202 comprising ramp 302 is illustrated in an initial wear condition Wi and in contact with seal seat 312. A distance Di, corresponding to the initial wear condition Wi, is defined between flange 215 and forward face 222 of alignment tab 212. In various embodiments and in response to an operational use of primary seal 202, primary seal 202 may progress through intermediate wear conditions W1 and W2. In various embodiments, wear condition W1 corresponds to a decreased distance D1 between flange 215 and forward face 222 of alignment tab 212 and a reduced ramp area 302W1, where the reduced ramp area 302W1 is less than the ramp area 302Wi and the distance D1 is less than Di. In various embodiments, wear condition W2 corresponds to a decreased distance D2 between flange 215 and forward face 222 of alignment tab 212 and a reduced ramp area 302W2, where the ramp area 302W2 is less than the ramp area 302W1 and the distance D2 is less than the distance D1. In various embodiments, primary seal 202 may progress through any number of intermediate wear conditions (Wn) prior to reaching a completed wear condition Wc where ramp 302 of primary seal 202 is, in response, worn away and flange 215 is thereby in contact with forward face 222 of alignment tab 212 generating an interference 500 tending to inhibit contact between primary seal 202 and seal seat 312.

In various embodiments, and in like manner to primary seal 202, primary seal 400 is illustrated in an initial wear condition Wi and in contact with seal seat 312. The distance Di, corresponding to the initial wear condition Wi, is defined between flange 215 and forward face 222 of alignment tab 212. In a like manner to primary seal 202 and, in response to an operation use of primary seal 400, primary seal 400 may progress through intermediate wear conditions W1 and W2, as described above, corresponding to reduced distances D1 and D2 where Di is greater than D1 and where D1 is greater than D2, and corresponding to reduced double step areas 412W1 and 412W2 where 412W1 is greater than 412W2. In various embodiments, primary seal 400 may progress through any number of intermediate wear conditions (Wn) prior to reaching the completed wear condition Wc where double step 412 of primary seal 400 is, in response, worn away and flange 215 is thereby in contact with forward face 222 of alignment tab 212 generating interference 500 tending to inhibit contact between primary seal 400 and seal seat 312.

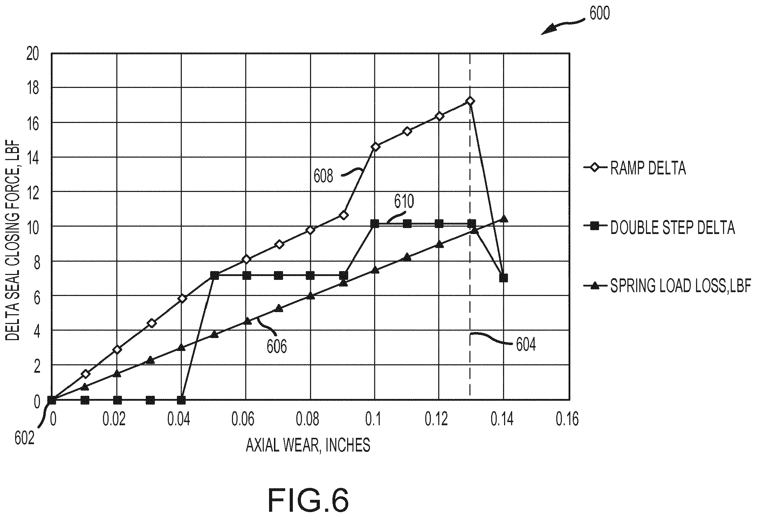

In various embodiments and with additional reference to FIG. 6, a graphical representation of a change in seal closing force of a force balanced face seal is shown. Plot 600 of distance D with respect to a change in seal closing force Fc is illustrated for a force balanced face seal 200 having been balanced such that the decrease in Fs is less than the decrease in Fp. Point 602 corresponds to the initial wear condition Wi and point 604 corresponds to the completed wear condition and intermediate points correspond to intermediate wear conditions. Line 606 shows the loss in spring force Fs as coil springs 226 expand. Line 608 shows the change seal closing force Fc attributable to the change in Fp for primary seal 202 and line 610 shows the change seal closing force Fc attributable to Fp for primary seal 400.

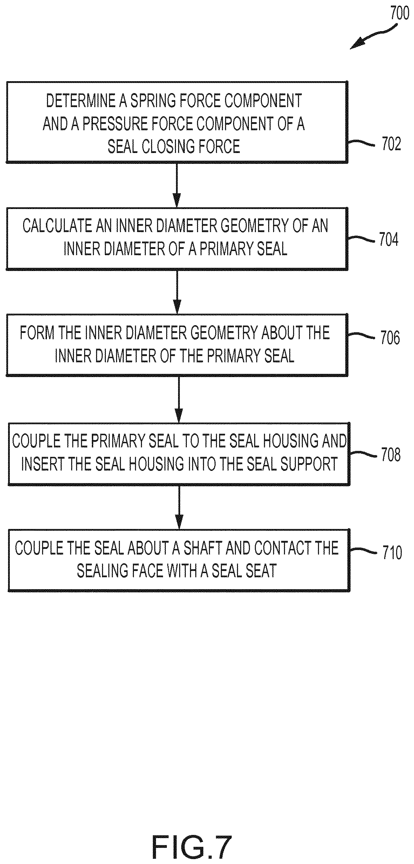

In various embodiments and with reference now to FIG. 7, a method 700 of manufacturing a force balanced face seal may comprise determining a spring force component and a pressure force component (702) of a seal closing force of a seal housing having a primary seal comprising an inner diameter, wherein the pressure force component acts against the spring force component. In various embodiments, the method may further comprise calculating an inner diameter geometry of the inner diameter of the primary seal (704) such that a decrease in the pressure force component between an initial wear condition and a complete wear condition is greater than a decrease in spring force component between the initial wear condition and the complete wear condition. In various embodiments, the method may further comprise forming the inner diameter geometry about the inner diameter of the primary seal between a sealing face and a base of the primary seal (706). In various embodiments, the method may further comprise coupling the primary seal to the seal housing having the annular extrusion and inserting the annular extrusion into a seal support comprising an alignment pin and a spring (708). In various embodiments, the method may further comprise coupling the seal support about a shaft of a gas turbine engine and contacting the sealing face with a seal seat of the shaft (710).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiment

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A force balanced face seal, comprising:
a seal housing comprising an annular extrusion;
a seal support, wherein the annular extrusion is disposed within the seal support; and
a primary seal coupled to the seal housing,
wherein the primary seal comprises a sealing face and a base opposite the sealing face and proximate the seal housing.

2. A gas turbine engine comprising:
a compressor section configured to compress a gas;
a combustor section aft of the compressor section and configured to combust the gas;
and a force balanced face seal as claimed in claim 1.

3. The force balanced face seal of claim 1 or the gas turbine engine of claim 2, wherein the primary seal further comprises an inner diameter and an outer diameter, wherein the inner diameter comprises an inner diameter feature geometry over a portion of the inner diameter between the sealing face and the base.

4. The force balanced face seal or the gas turbine engine of claim 3, wherein the inner diameter feature geometry comprises one of a ramp or a double step.

5. The force balanced face seal or the gas turbine engine of claim 3 or 4, wherein the inner diameter feature geometry comprises one of a radial geometry, a multi radial geometry, a convex geometry, or a concave geometry.

6. The force balanced face seal or the gas turbine engine of claim 3, 4 or 5, wherein the seal housing is driven axially, with respect to an axis of the annular extrusion, away from the seal support in response to a seal closing force.

7. The force balanced face seal of claim 6, wherein the seal closing force is a function of a spring force and a pressure force.

8. The gas turbine engine of claim 6, wherein the primary seal divides a high pressure compartment and a low pressure compartment, wherein the seal closing force is a function of a spring force and a pressure force, wherein the pressure force acts against the spring force in response to a pressure difference between the high pressure compartment and the low pressure compartment.

9. The force balanced face seal of claim 7 or the gas turbine engine of claim 8, wherein the pressure force is a function of the inner diameter feature geometry and a wear condition of the primary seal, and wherein the spring force is a function of the wear condition of the primary seal, and wherein the wear condition of the primary seal corresponds to a distance.

10. The force balanced face seal or the gas turbine engine of claim 9, wherein the spring force changes at a first rate with respect to the wear condition and the pressure force changes at a second rate with respect to the inner diameter feature geometry and the wear condition, wherein the first rate defines a decrease in the spring force between an initial wear condition and a complete wear condition, wherein the inner diameter feature geometry is such that the second rate defines a decrease in the pressure force between the initial wear condition and the complete wear condition greater than the decrease in the spring force between the initial wear condition and the complete wear condition.

11. The force balanced face seal or the gas turbine engine of claim 10, where, in response to the complete wear condition, the inner diameter feature geometry is worn away.

12. The gas turbine engine of claim 11, wherein the seal housing further comprises an alignment tab having a forward face and the seal support comprises an alignment pin having a flange, wherein the forward face of the alignment tab contacts the flange in response to the complete wear condition.

13. A method of manufacturing a force balanced face seal, the method comprising:
determining a spring force component and a pressure force component of a seal closing force of a seal housing having an annular extrusion, wherein the pressure force component acts against the spring force component;
calculating an inner diameter geometry of an inner diameter of a primary seal such that a decrease in the pressure force component between an initial wear condition and a complete wear condition is greater than a decrease in spring force component between the initial wear condition and the complete wear condition;
forming the inner diameter geometry over a portion of the inner diameter of the primary seal between a sealing face and a base of the primary seal;
coupling the primary seal to the seal housing having the annular extrusion and inserting the annular extrusion into a seal support comprising an alignment pin and a spring; and
coupling the seal support about a shaft of a gas turbine engine and contacting the sealing face with a seal seat of the shaft.
